Europäisches Patentamt

European Patent Office

Office européen des brevets

(19)

(11) Veröffentlichungsnummer: **0 279 311 B1**

(12) **EUROPÄISCHE PATENTSCHRIFT**

(45) Veröffentlichungstag der Patentschrift: **31.03.93**

(51) Int. Cl.⁵: **C08L 51/04**, C08L 87/00, C09D 151/04

(21) Anmeldenummer: **88101798.2**

(22) Anmeldetag: **08.02.88**

(54) **Die Verwendung von Bindemittelkombinationen in lösungsmittelhaltigen Beschichtungsmitteln für Kraftfahrzeugteile.**

(30) Priorität: **18.02.87 DE 3705090**

(43) Veröffentlichungstag der Anmeldung:
**24.08.88 Patentblatt 88/34**

(45) Bekanntmachung des Hinweises auf die
Patenterteilung:
**31.03.93 Patentblatt 93/13**

(84) Benannte Vertragsstaaten:
**AT BE DE ES FR GB IT NL SE**

(56) Entgegenhaltungen:
**EP-A- 0 172 589**
**EP-A- 0 275 011**
**DE-A- 2 364 736**
**DE-A- 2 756 708**
**US-A- 3 957 903**

(73) Patentinhaber: **BAYER AG**

**W-5090 Leverkusen 1 Bayerwerk(DE)**

(72) Erfinder: **Wamprecht, Christian, Dr.**
**Wilhelmstrasse 100**
**W-4150 Krefeld(DE)**
Erfinder: **Schönfelder, Manfred, Dr.**
**Hoehenstrasse 126**
**W-5090 Leverkusen 3(DE)**
Erfinder: **Höhlein, Peter, Dr.**
**Windmuehlenweg 3e**
**W-4152 Kempen 3(DE)**
Erfinder: **Kahl, Lothar, Dr.**
**Schuetzheiderweg 27**
**W-5060 Bergisch Gladbach(DE)**

**Beschreibung**

Die Erfindung betrifft die Verwendung von neuen Bindemittelkombinationen auf Basis von OH-funktionellen Lackbindemitteln und höherfunktionellen Vernetzern in lösungsmittelhaltigen Beschichtungsmitteln für Kraftfahrzeugteile.

Neben hervorragender Filmoptik und Chemikalienfestigkeit haben diese Überzüge ein sehr hohes Elastizitätsniveau und eine gute Oberflächenhärte.

Die erfindungsgemäßen Bindemittel eignen sich z. B. im Automobilsektor besonders zur Beschichtung von Teilen, die einer hohen Stoß- und Biegebeanspruchung und starken Bewitterungseinflüssen ausgesetzt sind.

Es ist bekannt, mit Hilfe von Lackierungen die Eigenschaften von Kunststoffen so zu verbessern, daß sie für ein spezielles Einsatzgebiet verwendet werden können. Will man Kunststoffteile z. B. im Automobilbereich an Stellen einsetzen, die der Bewitterung, der Stoßbeanspruchung und der Belastung durch Umwelteinflüsse besonders ausgesetzt sind, wie es z. B. im Bereich der unteren Seitenteils (Schweller), der Vorder- und Hinterteile, so müssen diese Teile mit Überzügen versehen werden, die hohe Flexibilität und gute Oberflächenhärten aufweisen.

Die dem Straßenschmutz besonders ausgesetzten Kunststoffoberflächen (Schweller) müssen durch Überzüge geschützt werden, die neben den mechanischen Anforderungen (Steinschlagfestigkeit) eine hohe Widerstandsfähigkeit gegen Salz, Treibstoffe, Teer- und Ölflecken aufweisen. Alle Überzüge müssen eine gute Filmoptik erzielen, die neben hohen Glanzgraden auch die Konservierung dieser optischen Eigenschaften über einen Zeitraum von vielen Jahren trotz Bewitterungseinflüssen gewährleistet.

Aus der DE-OS 2 364 736 ist bekannt, Kautschukerzeugnisse mit einem Acryllack auf Basis Styrol, Alkyl(meth)acrylsäureestern und Hydroxyalkyl(meth)acrylsäureestern in Kombination mit alkylierten Melamin-Formaldehydharzen bzw. Polyisocyanaten zu überziehen. Die entstandenen hochflexiblen Überzüge sind jedoch nicht immer ganz begreidigend in Bezug z. B. auf mechanische Eigenschaften, Haftung des Überzuges auf der Kunststoffoberfläche usw..

Vor der Beschichtung muß die Kautschukoberfläche oberflächenaktiviert und danach mit zwei Acrylharzlackschichten grundiert werden, da die Überzüge ihre besonderen Eigenschaften nur auf vorbehandelten Kautschukoberflächen, z.B, einem Ethylen-Propylen-Copolymerisatkautschuk, einem Styrol-Butadien-Copolymerisatkautschuk, einem Polybutadienkautschuk, einem Polyisoprenkautschuk oder einem Butylkautschuk zeigen.

Aus der DE-OS 2 756 708 sind Folien auf Polyacrylatbasis bekannt, die mit einem reaktiven Lacksystem auf Polyol/Polyisocyanatbasis ohne Haftungsprobleme und ohne Vorbehandlung beschichtet werden können. Die Beseitigung der Haftungsschwierigkeiten wird dadurch erzielt, daß den Copolymerisaten Monomere mit funktionellen Endgruppen in Mengen von 1 bis 15 Gew.-% zugesetzt werden, die einen Verbund mit dem reaktiven Lacksystem auf Isocyanatbasis eingehen können. Dieses Verfahren hat trotz des Wegfalls einer speziellen Vorbehandlung der Sustratoberfläche den Nachteil, daß es nur für den Spezialfall des Folienmaterials auf (Meth)Acrylatcopolymere anwendbar ist und Substratoberflächen auf anderer Polymerbasis in dieser Weise nicht beschichtet werden können.

Die EP-A-0 172 589 befaßt sich mit Dispersionen von Co-bzw. Pfropfpolymerisaten olefinisch ungesättigter Monomeren in schwachpolaren, für die Polymerisate lediglich als Dispergier- nicht jedoch als Lösungsmittel wirkenden aliphatischen Kohlenwasserstoffen, die, wie den Ausführungsbeispielen zu entnehmen, ohne Härter zu hochglänzenden Filmen auftrocknen, gegebenenfalls mit Diisocyanaten modifiziert sein können oder auch in Kombination mit Melaminharzen verarbeitet werden können. Bei allen Varianten wird offensichtlich die Herstellung von hochglänzenden Beschichtungen hoher Härte angestrebt. Lösungsmittelhaltige 2-Komponenten-Polyurethanlacke der nachstehend näher beschriebenen Art, die zur Herstellung von hochflexiblen Beschichtungen geeignet sind, werden in der Vorveröffentlichung nicht angesprochen, da weder elastifizierend wirkende Acrylsäureester bei der Herstellung der Polymerisate, noch die Verwendung von echten Lacklösungsmitteln noch der Einsatz von Polyisocyanat-Vernetzern in Betracht gezogen werden.

Gegenstand der Erfindung ist die Verwendung von Bindemittelkombinationen aus

A) 99 - 30 Gew.-Teilen OH-funktioneller Pfropfcopolymerisatharze, hergestellt durch Copolymerisation von

a) 1 - 60 Gew.-Teilen mindestens eines gegebenenfalls funktionellen Polybutadiens mit einem Molekulargewicht von 500 - 10.000 und mit mehr als 30 % 1,2-Vinylstruktur,

b) 5 - 60 Gew.-Teilen mindestens eines ungesättigten aromatischen Monomeren wie Styrol, Vinyltoluol und/oder Methacrylsäureester mit aliphatischen $C_1$-$C_6$-Kohlenwasserstoffresten,

c) 5 - 80 Gew.-Teilen mindestens eines aliphatischen Acrylsäureesters mit 1 - 12 C-Atomen in der Alkoholkomponente,

2

d) 10 - 60 Gew.-Teilen mindestens eines Hydroxyalkylesters der Acryl- bzw. Methacrylsäure mit 2 - 8 C-Atomen im Hydroxyalkylrest,

e) 0 - 50 Gew.-Teilen mindestens eines Acryl-bzw. Methacrylsäureglycidylesters bzw. deren Umsetzungsprodukten mit aliphatischen und/oder aromatischen Monocarbonsäuren und Aminoverbindungen,

f) 0 - 30 Gew.-Teilen Acrylnitril,

g) 0,05 - 10 Gew.-Teilen mindestens einer $\alpha,\beta$-monoolefinisch ungesättigten Mono- oder Dicarbonsäure mit 3 - 7 C-Atomen und/oder mindestens eines Maleinsäure- bzw. Fumarsäurehalbesters mit 2 - 14 C-Atomen im Alkoholrest, vorzugsweise Acrylsäure und

B) 1 - 70 Gew.-Teilen eines Polyisocyanats als Vernetzerharz,

wobei jeweils die Summe der Gewichtsteile der Komponenten A) und B) und die Summe der Gewichtsteile der Komponenten a) bis g) 100 beträgt

als Bindemittel in lösungsmittelhaltigen Beschichtungsmitteln für Kraftfahrzeugteile

Die Herstellung der Pfropfcopolymerisatharze A kann durch Copolymerisation der Bestandteile a - g nach üblichen Verfahren erfolgen. Eine radikalische Polymerisation in Masse bzw. in Lösung ist bevorzugt. Dabei werden bei Temperaturen von 70 - 160°C, in Gegenwart von Radikalbildnern und gegebenenfalls Reglern, monomere und oligomere Bausteine copolymerisiert.

Bevorzugte Ausgangsverbindungen für die Polyacrylatharze A bestehen aus:

a) 1 - 55 Gew.-Teilen eines oder mehrerer gegebenenfalls funktioneller Polybutadiene mit einem Molekulargewicht von 500 - 10.000 und mehr als 35 % 1,2-Vinylstruktur,

b) 5 - 55 Gew.-Teilen Styrol, Vinyltoluol, Methylmethacrylat, Butylmethacrylat oder deren Mischungen,

c) 5 - 75 Gew.-Teilen Ethylacrylat, Butylacrylat, 2-Ethylhexylacrylat oder deren Mischungen,

d) 10 - 55 Gew.-Teilen 2-Hydroxyethylacrylat, 2-Hydroxypropylacrylat, 4-Hydroxybutylacrylat, 2-Hydroxyethylmethacrylat, 2-Hydroxypropylmethacrylat oder deren Mischungen,

e) 0 - 45 Gew.-Teilen Glycidylacrylat, Glycidylmethacrylat oder deren Mischungen, gegebenenfalls nach Umsetzung mit gesättigten und/oder ungesättigten aliphatischen und/oder aromatischen Monocarbonsäuren, wobei die Umsetzung vor, vorzugsweise nach der Copolymerisation, bei Temperaturen von 80 - 160°C unter Verwendung üblicher Katalysatoren durchgeführt wird,

f) 0 - 25 Gew.-Teilen Acrylnitril,

g) 0,1 - 8 Gew.-Teilen Acrylsäure, Methacrylsäure oder Maleinsäurehalbester mit 4 - 8 C-Atomen in der Alkoholkomponente oder deren Mischungen,

Als Ausgangsmaterialien a) für die erfindungsgemäßen Pfropfcopolymerisatharze sind grundsätzlich alle Polybutadiene geeignet, die seitenständige 1,2-Vinyldoppelbindungen besitzen.

Es eignen sich bevorzugt Polybutadiene mit einem Gehalt an vinylischen Doppelbindungen von > 30 %. Dabei kann der Rest an Doppelbindungen aus einem beliebigen Verhältnis von cis 1,4- und trans 1,4-Struktur bestehen. Ein besonders geeignetes Ausgangsmaterial ist ein Produkt mit mehr als 80 % seitenständigen 1,2-Vinyldoppelbindungen.

Im allgemeinen wird man Isomerengemische von Polybutadienen einsetzen, z. B. Polybutadiene die 30 - 90 % vinylischen Doppelbindungen und 10 - 70 % Gemischen von cis-1,4 und trans-1,4 Doppelbindungen aufweisen. Weiterhin können die Polybutadiene gegebenenfalls funktionelle Gruppen tragen, z. B. Hydroxylgruppen, Carboxylgruppen.

Solche Polybutadiene mit unterschiedlicher Konfiguration sind bekannt, z. B. "Makromoleküle" von H. G. Elias, 4. Auflage, Hüthig und Wepf-Verlag, Basel, Heidelberg, New York, Seiten 676 sowie 744 - 746 und 1012 ff.

Die Monomeren bzw. Oligomeren a - g werden im wesentlichen in den gleichen Verhältnissen, wie sie zur Polymerisation eingesetzt werden, in das Pfropfcopolymerisat eingebaut. Die eingebauten Einheiten können im wesentlichen statistisch verteilt sein.

Als Lösungsmittel bei der Herstellung der Komponente A eignen sich beispielsweise Aromaten, wie Benzol, Toluol, Xylol, Chlorbenzol, Ester wie Ethylacetat, Butylacetat, Methylglykolacetat, Ethylglykolacetat, Methoxypropylacetat, Ether wie Butylglykol, Tetrahydrofuran, Dioxan, Ethylglykolether, Diethylenglykoldialkylether, Ketone wie Aceton, Methylethylketon, Methylisobutylketon, halogenierte Lösungsmittel wie Methylenchlorid oder Trichlormonofluorethan.

Die Herstellung der Pfopfpolyacrylatharze A kann kontinuierlich oder diskontinuierlich erfolgen. Üblicherweise wird in einem Polymerisationsreaktor gleichmäßig und kontinuierlich die Monomerischung und den Initiator eindosiert und gleichzeitig die entsprechende Menge Polymerisat kontinuierlich abgeführt. Vorzugsweise können so chemisch nahezu einheitliche Copolymere hergestellt werden. Chemisch nahezu einheitliche Copolymere können auch hergestellt werden, indem man die Reaktionsmischung mit konstanter Geschwindigkeit in einen Rührkessel einlaufen läßt, ohne das Polymerisat abzuführen.

Im allgemeinen erfolgt die Pfropfcopolmerisation im Temperaturbereich von 70 - 160°C, vorzugsweise von 100 - 150°C unter einem Druck von $10^3$ bis $2 \times 10^4$ mbar. Die Initiatoren werden in Mengen von 0,05 bis 15 Gew.-%, bezogen auf die Gesamtmenge der Monomeren, eingesetzt.

Geeignete Initiatoren zur Herstellung der Polyacrylatharze der Komponente A sind übliche Radikalstarter, z.B. aliphatische Azoverbindungen, wir Azodiisobuttersäurenitril, Azo-bis-2-methylvaleronitril, 1,1'-Azo-bis-1-cyclohexannitril und 2,2'-Azo-bis-isobuttersäurealkylester; symmetrische Diacylperoxide, z. B. Acetyl-, Propionyl- oder Butyrylperoxid, mit Brom-, Nitro-, Methyl- oder Methoxyl-Gruppen substituierte Benzoylperoxide, Lauroylperoxid; symmetrische Peroxidicarbonate, z. B. Diethyl-, Diisopropyl-, Dicyclohexyl- sowie Dibenzoylperoxidcarbonat; tert.-Butylperoctoat, t-Butylperbenzoat oder tert.-Butylphenylperacetat sowie Peroxycarbonate wie tert.-Butyl-N-(phenylperoxy)-carbonat oder tert.-Butyl-N-(2-, 3- oder 4-chlor-phenylperoxy)-carbonat, Hydroperoxide wie tert.-Butylhydroperoxid, Cumolhydroperoxid, Dialkylperoxide wie Dicumylperoxid, tert.-Butylcumylperoxid oder Di-tert.-butylperoxid.

Zur Regelung des Molekulargewichts des Acrylharzes der Komponente A können übliche Regler bei der Herstellung eingesetzt werden, z. B. n-Dodecylmercaptan, Mercaptoethanol, Diisopropylxanthogendisulfid und Di(methylentrimethylolpropan)xanthogendisulfid. Bevorzugt ist Mercaptoethanol. Die Regler werden in Mengen von 0,1 bis 10 Gew.-%, bezogen auf das Monomerengemisch, zugegeben.

Die Flexibilität der aus den erfindungsgemäßen Pfropfcopolymerisationsharzen A hergestellten Überzüge kann unter vergleichsweise geringer Härteeinbuße gegebenenfalls noch dadurch gesteigert werden, daß man die Pfropfcopolymerisationsharze A mit Lactonen, insbesondere Butyrolacton und $\epsilon$-Caprolacton, modifiziert.

Die Umsetzung der Pfropfcopolymerisationsharze A mit den Lactonen erfolgt zweckmäßig bei Temperaturen von 100 - 160°C, in Gegenwart von Katalysatoren, entweder nach oder Während der radikalischen Polymerisation. Geeignete Katalysatoren für die neben der radikalischen Polymerisation ablaufende Ringöffnungspolymerisation der Lactone sind Metallverbindungen, beispielsweise Titanate, bevorzugt organische Zinnverbindungen wie Dibutylzinnoxid, Dibutylzinndilaurat, Dibutylzinndiacetat, Zinndioctoat etc.

Die Katalysatoren werden in Mengen von 0,01 - 0,2 Gew.-%, bezogen auf das Gewicht der eingesetzten Lactonen, eingesetzt.

Weiterhin lassen sich solche Lactonmodifizierungen auch durchführen, indem lactonmodifizierte Monomere bei der Herstellung der Pfropfcopolymerisatharze eingesetzt werden.

Die erfindungsgemäßen Polymerisatharze stellen wertvolle Bindemittelkomponenten für Zweikomponenten-Lacke dar. Da es sich bei den erfindungsgemäßen Polymerisatharzen um Bindemittelkomponenten für Zweikomponenten-Lacke handelt, enthalten die Lacken neben den erfindungsgemäßen Polymerisatharzen (und gegebenenfalls weiteren Polyhydroxylverbindungen) eine Härterkomponente. Da es sich bei diesem Härter um ein Polyisocyanat mit freien Isocyanatgruppen handelt, können die gebrauchsfertigen Beschichtungsmittel erst kurz vor ihrer Verarbeitung durch Abmischen der Komponenten hergestellt werden.

Als Reaktionskomponente B für die erfindungsgemäßen OH-funktionellen Pfropfcopolymerisatharze zur Herstellung von Lackbindemitteln für Überzüge und Beschichtungen kommen marktübliche Lackpolyisocyanate in Betracht (z. B. US-A- 3124605, 3358010, 3903126, 3903127, 3976622, 3183112, 3394111, 3645979, 3919218; GB-A- 1060430, 1234972 und 1458564) wie Lackpolyisocyanate, die Biuretgruppen, Urethangruppen, Allophanatgruppen oder Isocyanuratgruppen aufweisen.

Die Urethangruppen enthaltenden Polyisocyanate sind vorzugsweise Addukte aus aliphatischen Tri- und Tetraolen, z. B. Trimethylolpropan, Glycerin, Pentaerythrit und aromatischen oder cycloaliphatischen Diisocyanaten wie 2,4 und/oder 2,6-Toluylendiisocyanat, 2,4'- und/oder 4,4'-Diisocyanatodicyclohexylmethan, Isophorondiisocyanat. Im wesentlichen reagiert eine Hydroxylgruppe des Polyols mit einem Mol Diisocyanat.

Isocyanuratgruppen aufweisende Polyisocyanate sind Cyclotrimerisationsprodukte der genannten aliphatischen und aromatischen Diisocyanate, insbesondere von Toluylendiisocyanat und Hexamethylendiisocyanat.

Die Hydroxylgruppen enthaltenden Pfropfcopolymerisatharze und die zur Vernetzung verwendeten Polyisocyanate werden in solchen Mengenverhältnissen eingesetzt, daß auf eine Hydroxylgruppe 0,5 bis 2, vorzugsweise 0,7 bis 1,3 Isocyanatgruppen entfallen.

Bei der erfindungsgemäßen Verwendung können neben den zwingend vorliegenden Lösungsmitteln weitere, aus der Lacktechnologie bekannte Hilfs- und Zusatzmittel mitverwendet werden, z.B. Pigmente, viskositätsregulierende Stoffe, Antischaummittel, Katalysatoren für die NCO/OH-Additionsreaktion, UV-Absorber, Antioxidantien oder sonstige den Polymerabbau verhindernde Substanzen, z.B. sterisch gehinderte Amine.

Die erfindungsgemäßen Beschichtungsmittel werden vorzugsweise bei Temperaturen von 0 bis 130°C ausgehärtet. Dabei entstehen Überzüge mit einer sehr hohen Dehnfähigkeit und zugleich hoher Härte, ausgezeichneter Witterungs- und Chemikalienbeständigkeit.

Sie sind daher besonders geeignet zur Beschichtung von Gegenständen, die dem Wetter ausgesetzt sind, wie Metallen, z. B. Kraftfahrzeuge

Die Applikation der Lacke erfolgt nach üblichen Methoden, beispielsweise durch Spritzen, Gießen, Tauchen, Streichen, Sprühen oder Walzen. Die Lacke werden im allgemeinen in solchen Mengen aufgetragen, daß Trockenfilmstärken der Lacke von 0,005 bis 0,1 mm resultieren.

Beispiele

Alle Prozentangaben sind Gewichtsprozente, alle Angaben in "Teilen" Gewichtsteile.

Beispiele 1 - 7, 8a, 9a, V1, V2

In einem mit Rückflußkühler, Heiz-, Kühl- und Dosiervorrichtungen versehenen Reaktor wird die in Tabelle I angegebene Menge Lösungsmittel vorgelegt und auf 120°C erwärmt. Im Verlauf von 2 Stunden wird unter Stickstoffatmosphäre bei dieser Temperatur eine Mischung der jeweiligen in Tabelle I angegebenen Monomeren und des Reglers zudosiert. Gleichzeitig erfolgt unter getrennter Dosierung innerhalb von 2,5 Stunden die Zugabe des in Tabelle I angegebenen Initiators, gelöst in der angegebenen Menge Lösungsmittel.

Dann wird 3 Stunden bei 120°C nachgerührt und das Polymerisat anschließend über einen Filter abgedrückt. Die Kenndaten der Pfropfcopolymerisatharze 1 - 9 und der Vergleichsbeispiele V1 und V2 sind in Tabelle II angegeben.

Beispiele 8b und 9b

In einem mit Rückflußkühler versehenen Reaktionsgefäß werden 800 Teile 8a bzw. 9a, 160 Teile $\epsilon$-Caprolacton und 0,1 Teile Zinndioctoat 6 Stunden bei 130°C gerührt. Anschließend wird das Produkt über einen Filter abgedrückt.

Die Mengenangaben in Tab.I erfolgen in Gewichtsteilen.

Tabelle I

| Beispiel | 1 | 2 | 3 | 4 | 5 | 6 | 7 | 8a | 9a | V1 | V2 |
|---|---|---|---|---|---|---|---|---|---|---|---|
| Xylol | 900 | 900 | 900 | 700 | 700 | 600 | 600 | 700 | 700 | 600 | 600 |
| Polybutadien Nisso G-1000[1]® | 195 | 195 | 195 | 175 | 175 | | | 175 | 117 | | |
| Polybutadien Lithene PL2[2]® | | | | | | 189 | 189 | | | | |
| Styrol | 98 | | | 130 | 120 | 139 | 120 | 130 | 187 | 124 | 190 |
| Methylmethacrylat | | 98 | | | | | | | | 124 | |
| Butylacrylat | 453 | 453 | 448 | 578 | 533 | 622 | 571 | 481 | 481 | 674 | 480 |
| 2-Ethylhexylacrylat | | | 97 | | | | | | | | 252 |
| 2-Hydroxyethylacrylat | 220 | 220 | 220 | 270 | | 292 | | 363 | 365 | 327 | 327 |
| Butandiolmonoacrylat | | | | | 325 | | 362 | | | | |
| Acrylsäure | 10 | 10 | 10 | 12 | 12 | 13 | 13 | 16 | 16 | 12 | 12 |
| Mercaptoethanol | 30 | 30 | 36 | 43 | 43 | 46 | 46 | 43 | 36 | | |
| t-Butylperoxy-2-ethylhexanoat | 14 | 14 | 14 | 17 | 17 | 19 | 19 | 17 | 26 | 49 | 49 |
| Xylol | 80 | 80 | 80 | 75 | 75 | 80 | 80 | 75 | 72 | 90 | 90 |

1) Molekulargewicht ca. 1400, OH-Gehalt ca. 2,5 %, > 90 % 1,2 Vinyldoppelbindungen

2) Molekulargewicht ca. 900, 40 - 50 %, 1,2-Vinyldoppelbindungen, 30 - 40 % 1,4-trans-Doppelbindungen, 15 - 25 % 1,4-cis-Doppelbindungen

Tabelle II

| Beispiel | 1 | 2 | 3 | 4 | 5 | 6 | 7 | 8a | 8b | 9a | 9b | V1 | V2 |
|---|---|---|---|---|---|---|---|---|---|---|---|---|---|
| Festgehalt (%) [1] | 49,4 | 50,2 | 50,3 | 60,1 | 60,3 | 65,4 | 65,6 | 60,4 | 65,3 | 59,8 | 66,5 | 65,9 | 65,3 |
| Viskosität (20°C) (mPa.s) | 1079 | 831 | 911 | 2853 | 2016 | 1923 | 1598 | 2580 | 2941 | 1300 | 1494 | 1360 | 1610 |
| Säurezahl (mg KOH/g Substanz) | 4 | 4 | 4 | 5 | 5 | 5 | 5 | 6 | 5 | 6 | 5 | 5 | 5 |
| Hydroxylzahl (mg KOH/g Substanz) | 71 | 72 | 74 | 88 | 86 | 87 | 87 | 110 | 90 | 108 | 292 | 79 | 80 |
| Farbzahl (APHA) | 70 | 50 | 40 | 10 | 15 | 50 | 60 | 10 | 30 | 10 | 35 | 45 | 15 |

1) Gew.-% auf nichtflüchtige Anteile

Prüfergebnisse von Weißlacken, hergestellt mit den neuen Pfropfcopolymerisationsharzen und den Vergleichsbeispielen nach folgender Rezeptur:

7

Gew.-% lösungsmittelfreie Bestandteile

44,4 Pfropfcopolmerisatharz, bzw. Vergleichsbeispiel
0,1 Zinkoctoat
1,2 Tinuvin 900[1]
0,6 Bentone 38[2]
36,8 Titandioxid (Kronos 2160)
16,9 Desmodur N (Hexamethylendiisocyanatbiuret)
100,0

Verarbeitungsfestkörper: 46 Gew.-% in 54 Gew.-% Löser-
gemisch aus Xylol, Methoxypro-
pylacetat, Ethylacetat und
Methylethylketon.

[1] Tinuvin 900:

UV-Absorber, Dialkyl-substituiertes Hydroxyphenyltri-
azol, Ciba Geigy

[2] Bentone 38: Magnesiumschichtsilikat der Firma
Kronos Titan GmbH

8

EP 0 279 311 B1

| Beispiel | 1 | 2 | 3 | 4 | 5 | 6 | 7 | 8 | 9 | V1 | V2 |
|---|---|---|---|---|---|---|---|---|---|---|---|
| Standzeit bei Raumtemp.(h)ca. | 2,8 | 4,4 | 4,4 | 14,4 | 12,8 | 15,8 | 13,6 | 2,7 | 7,1 | 22 | 14,7 |
| Trocknung (drying time rec.) (h)ca. | 3,6 | 3,7 | 3,0 | 5,6 | 3,9 | 5,3 | 3,5 | 2,3 | 2,4 | 7,1 | 2,3 |
| Glanz (60° Gardner) | 86 | 85 | 84 | 92 | 93 | 93 | 92 | 91 | 93 | 90 | 92 |
| Pendelhärte (nach 14 Tagen) | 105 | 123 | 98 | 137 | 122 | 90 | 88 | 76 | 78 | 104 | 77 |
| Anlösbarkeit * (1 Min. Einwirkung) Toluol | 0 | 0 | 0 | 0 | 0 | 1 | 0 | 0 | 0 | 2 | 1 |
| MPA | 0 | 0 | 0 | 0 | 0 | 0 | 0 | 0 | 0 | 1 | 1 |
| EA | 1 | 1 | 1 | 0 | 0 | 1 | 1 | 1 | 0 | 3 | 2 |
| Aceton | 2 | 2 | 2 | 0 | 1 | 2 | 1 | 1-2 | 1 | 3 | 2 |
| Teerbeständigkeit * Einwirkung DB-Teerlsg. 1 h | 0 | 0 | 0 | 0 | 0 | 0 | 0 | 0 | 0 | 1 | 1 |
| 3 h | 0 | 0 | 0 | 0 | 0 | 0 | 0 | 1 | 1 | 1 | 1 |
| 24 h | 1 | 0-1 | 1 | 0 | 1 | 1 | 1 | 1 | 1 | 2 | 2 |
| Knicktest 1 Inch * (auf Bayflex 91) 0° C | + | + | + | + | + | + | + | + | + | + | + |
| - 5° C | + | + | + | + | + | + | + | + | + | + | + |
| - 10° C | + | + | + | + | + | + | + | + | + | - | + |
| - 15° C | + | + | + | + | + | + | + | + | + | - | - |
| - 20° C | + | + | + | + | + | + | + | + | + | - | - |
| - 25° C | - | - | - | - | + | - | + | + | + | - | - |
| - 30° C | - | - | - | - | - | - | - | + | + | - | - |

1 Inch : 2,54 · $10^{-2}$ m

```
*  0              = bestmöglicher Wert
   4              = ungünstigster Wert
   MPA            = Methoxypropylacetat
   EA             = Ethylacetat
   DB-Teerlsg.®   = Lösung von Teer in organischen
                    Lösungsmitteln (Daimler Benz)
   Bayflex 91®    = PUR-Integralschaum (Bayer AG)
   APHA           = Maßeinheit der Farbzahl nach Hazen
```

Ausführung des Knicktests:

Ein mit den Weißlacken 1 - 9 bzw. V1 und V2 lackiertes Bayflex-Werkstück mit den Maßen Dicke 3 mm, Breite 15 mm, Länge 100 mm, wird auf einen Dorn vom Durchmesser 1 inch (= $2,54 \cdot 10^{-2}$ m) gelegt. Dann wird das lackierte Werkstück 180° um den Dorn gebogen.

Ergebnisse:     + Überzug in Ordnung

                   - Überzug gerissen

**Patentansprüche**

1. Verwendung von Bindemittelkombinationen aus

A) 99 - 30 Gew.-Teilen OH-funktioneller Pfropfcopolymerisatharze, hergestellt durch Copolymerisation von

a) 1 - 60 Gew.-Teilen mindestens eines gegebenenfalls funktionellen Polybutadiens mit einem Molekulargewicht von 500 - 10.000 und mit mehr als 30 % 1,2-Vinylstruktur,

b) 5 - 60 Gew.-Teilen mindestens eines ungesättigten aromatischen Monomeren wie Styrol, Vinyltoluol und/oder Methacrylsäureester mit aliphatischen $C_1$-$C_6$-Kohlenwasserstoffresten,

c) 5 - 80 Gew.-Teilen mindestens eines aliphatischen Acrylsäureesters mit 1 - 12 C-Atomen in der Alkoholkomponente,

d) 10 - 60 Gew.-Teilen mindestens eines Hydroxyalkylesters der Acryl- bzw. Methacrylsäure mit 2 - 8 C-Atomen im Hydroxyalkylrest,

e) 0 - 50 Gew.-Teilen mindestens eines Acryl-bzw. Methacrylsäureglycidylesters bzw. deren Umsetzungsprodukten mit aliphatischen und/oder aromatischen Monocarbonsäuren und Aminoverbindungen,

f) 0 - 30 Gew.-Teilen Acrylnitril,

g) 0,05 - 10 Gew.-Teilen mindestens einer $\alpha,\beta$-monoolefinisch ungesättigten Mono- oder Dicarbonsäure mit 3 - 7 C-Atomen und/oder mindestens eines Maleinsäure- bzw. Fumarsäurehalbesters mit 2 - 14 C-Atomen im Alkoholrest, vorzugsweise Acrylsäure und

B) 1 - 70 Gew.-Teilen eines Polyisocyanats als Vernetzerharz,

wobei jeweils die Summe der Gewichtsteile der Komponenten A) und B) und die Summe der Gewichtsteile der Komponenten a) bis g) 100 beträgt

als Bindemittel in lösungsmittelhaltigen Beschichtungsmitteln für Kraftfahrzeugteile

2. Verwendung gemäß Anspruch 1, dadurch gekennzeichnet, daß das Polyacrylatharz A in mit Lactonen modifizierter Form zum Einsatz gelangt, wobei die Lacton-Modifizierung während oder nach der Pfropfcopolymerisation oder unter Verwendung von lactonmodifizierten Monomeren bei der Herstellung der Pfropfcopolymerisatharze erfolgt.

3. Verwendung gemäß Anspruch 1 und 2, dadurch gekennzeichnet, daß man als Bindemittelkombination eine solche aus

A) 90 - 30 Gew.-Teilen OH-funktioneller Pfropfcopolymerisatharze und

B) 10 - 70 Gew.-Teilen Vernetzerharz, ausgewählt aus der Gruppe bestehend aus Biuret-, Urethan-, Allophanat- und Isocyanuratgruppen aufweisenden Lackpolyisocyanaten

verwendet.

**Claims**

1. The use of binder combinations of
   A) 99 to 30 parts by weight OH-functional graft copolymer resins produced by copolymerization of
      a) 1 to 60 parts by weight of at least one optionally functional polybutadiene having a molecular weight of 500 to 10,000 and more than 30% 1,2-vinyl structure,
      b) 5 to 60 parts by weight of at least one unsaturated aromatic monomer, such as styrene, vinyl toluene and/or methacrylates containing aliphatic $C_{1-6}$ hydrocarbon radicals,
      c) 5 to 80 parts by weight of at least one aliphatic acrylate containing 1 to 12 carbon atoms in the alcohol component,
      d) 10 to 60 parts by weight of at least one hydroxyalkyl acrylate or methacrylate containing 2 to 8 carbon atoms in the hydroxyalkyl component,
      e) 0 to 50 parts by weight of at least one glycidyl acrylate or methacrylate or reaction products thereof with aliphatic and/or aromatic monocarboxylic acids and amino compounds,
      f) 0 to 30 parts by weight acrylonitrile,
      g) 0.05 to 10 parts by weight of at least one $\alpha,\beta$-monoolefinically unsaturated mono- or dicarboxylic acid containing 3 to 7 C atoms and/or at least one maleic acid or fumaric acid semiester containing 2 to 14 carbon atoms in the alcohol component, preferably acrylic acid, and
   B) 1 to 70 parts by weight of a polyisocyanate as crosslinker resin,
   the sum of the parts by weight of components A) and B) being 100 and the sum of the parts by weight of components a) to g) being 100,
   as binders in solvent-based coating compositions for auto parts.

2. The use claimed in claim 1, characterized in that the polyacrylate resin A is used in lactone-modified form, the lactone modification being carried out during or after the graft copolymerization or using lactone-modified monomers in the production of the graft copolymer resins.

3. The use claimed in claims 1 and 2, characterized in that a binder combination of
   A) 90 to 30 parts by weight OH-functional graft copolymer resins and
   B) 10 to 70 parts by weight crosslinker resin selected from the group consisting of lacquer polyisocyanates containing biuret, urethane, allophanate and isocyanurate groups
   is used as the binder combination.

**Revendications**

1. Utilisation de combinaisons de liants comprenant :
   A) de 99 à 30 parties en poids de résines de copolymères greffés OH-fonctionnelles, préparées par copolymérisation de
      a) 1 à 60 parties en poids d'au moins un polybutadiène éventuellement fonctionnel ayant un poids moléculaire de 500 à 10.000 et une structure 1,2-vinyle pour plus de 30%,
      b) 5 à 60 parties en poids d'au moins un monomère aromatique insaturé, tel que le styrène, le vinyltoluène et/ou un ester méthacrylique contenant des radicaux d'hydrocarbures aliphatiques en $C_1$-$C_6$,
      c) 5 à 80 parties en poids d'au moins un ester acrylique aliphatique contenant de 1 à 12 atomes de carbone dans le composant alcool,
      d) 10 à 60 parties en poids d'au moins un ester hydroxyalkylique de l'acide acrylique ou méthacrylique contenant de 2 à 8 atomes de carbone dans le radical hydroxyalkyle,
      e) 0 à 50 parties en poids d'au moins un ester glycidylique de l'acide acrylique ou méthacrylique ou de leurs produits de mise en réaction avec des acides monocarboxyliques aliphatiques et/ou aromatiques et avec des composés amino,
      f) 0 à 30 parties en poids d'acrylonitrile
      g) 0,05 à 10 parties en poids d'au moins un acide mono- ou dicarboxylique à insaturation mono-oléfinique $\alpha,\beta$ contenant de 3 à 7 atomes de carbone et/ou d'au moins un demi-ester de l'acide maléique ou de l'acide fumarique contenant de 2 à 14 atomes de carbone dans le radical alcool, de préférence l'acide acrylique, et
   B) 1 à 70 parties en poids d'un polyisocyanate comme résine de réticulation,
   la somme des parties en poids des composants A) et B) et la somme des parties en poids des composants a) à g) étant chaque fois égale à 100

comme liants dans des agents d'enduction contenant un solvant, destinés à des pièces pour automobiles.

2. Utilisation selon la revendication 1, caractérisé en ce qu'on met en oeuvre la résine A de polyacrylate sous une forme modifiée par des lactones, la modification à l'aide de lactones ayant lieu pendant ou après la copolymérisation par greffage ou bien en utilisant des monomères modifiés par des lactones lors de la préparation des résines de copolymères greffés.

3. Utilisation selon les revendications 1 et 2, caractérisée en ce qu'on utilise, comme combinaison de liants, une combinaison comprenant :

A) 90 à 30 parties en poids de résines de copolymères greffés OH-fonctionnelles et

B) 10 à 70 parties en poids de résine de réticulation choisie parmi le groupe comprenant des polyisocyanates destinés à des laques, des vernis ou des peintures présentant des groupes biuret, des groupes uréthanne, des groupes allophanate et des groupes isocyanurate.